# EUROPEAN PATENT APPLICATION

(11) **EP 1 909 430 A1**
(43) Date of publication of application: **09.04.2008**
(21) Application number: 06753062.6
(22) Date of filing: 29.06.2006
(51) Int. Cl.: H04L 9/32, H04L 12/28

(54) **ACCESS AUTHORIZATION SYSTEM OF COMMUNICATION NETWORK AND METHOD THEREOF**

(30) Priority: 21.07.2005 CN 200510085492
(71) Applicant: Huawei Technologies Co., Ltd., Longgang District Shenzhen 518129 (CN)
(72) Inventor: LI, Yingtao, Shenzhen, Guangdong 518129 (CN); HE, Junhong, Shenzhen, Guangdong 518129 (CN); ZHANG, Tao, Shenzhen, Guangdong 518129 (CN)
(74) Representative: Körber, Martin Hans
(86) International application number: PCT/CN2006/001497
(87) International publication number: WO 2007/009343

(57) **Abstract**

An access authorization system of communication network and the corresponding method are provided. The main principle of the invention is: the client node initiates an authorization request to an authorization server node and obtains an authorization result, then the client node transmits the result together with a service request to content/service providing authorization nodes; and the content/service providing authorization nodes carry out the authorization process of the request service and the integrative authorization process, then obtain the authorization result for the client node. The invention supports mixed applications of third-party authentication and value added service provider, mixed applications of data network of operator and supplementary service provider; and mixed applications of SIP network and Web network.

## Description

### Field of the Invention

The present invention relates to the field of network communication technologies, and in particular to a system and method for authenticating access to a communication network.

### Background of the Invention

The Next Generation Network (NGN) and the Internet are two network architectures which are independent of and dependent upon each other at present. The services defined for the NGN have been integrated with the Next Generation Internet (NGI) services. In particular, all the new NGN services originate from the NGI.

One of the key points of the integration of the two networks lies in the integration of users and of user attributes to enable the users to pass authentication and obtain services from both the NGN and NGI.

One of the existing methods for authenticating network identities is the Passport designed by the Microsoft Cooperation, the United States, which is an on-line user authentication service. The websites that have subscribed to the Passport can enjoy such a user identity authentication service without the need of maintaining their own user authentication systems. It should be noted that the Passport service per se does not deal with the grant of a user right. The grant of a user right needs to be implemented by a specific Application Service Provider (ASP).

An essential service provided by the Passport is the Single Sign-In (SSI). In addition, the Passport provides two optional services as follows.

1. Passport Express Purchase: the credit card information of users is stored to facilitate the electronic transaction process.

2. Kids Passport Service: Children are enabled to have their own identities and be subject to certain protections from the society.

The current Passport version 1.0 contains the following personal information:
User's first and last names;
Nickname;
Gender;
Date of birth;
Preferred language;
Time zone;
Occupation; and
Secret question and answer, used to retrieve the password that the user has forgotten.

If the service is the Passport Express Purchase, the Passport also contains information regarding Passport Wallet Profile. It should be noted that in the Passport version 2.0, the Microsoft Cooperation will allow ASPs and Internet Service Providers (ISPs) to create and maintain the Passport for their users.

On a webpage of a subscribing website for logon, a user enters a logon name and password. The user is redirected to a Passport server and obtains encrypted information regarding personal Cookie Profile. A COM component, Passport Manager, on the server of the subscribing website receives and decrypts such information and determines whether the user has a corresponding right. When the user visits another subscribing website, the Passport provides the user directly with the Cookie Profile without the need of entering the user name and password (this function is called Cobranding). Finally, when the user logs off the Passport, the system deletes the local Cookie Profile.

As can be seen, the Passport is a centralized authentication system. User information is stored in a centralized Passport database through the Triple Digital Encryption Standard (DES), and is transmitted through the Secure Socket Layer (SSL) protocol. The Passport provides different Triple DES keys for different subscribing websites.

For most of the users, the security provided by the above authentication mechanism is trustable and thus they can store personal information on their computers at ease. However, a researcher has found a fault in the Passport authentication service, through which user information including user name, password, credit card password, and so on can be stolen. More than 200 million computers have been involved in. The fault is so obvious that great panic has been caused to people. A hacker can obtain a new password using the password resetting service of the Passport server simply by entering a Universal Resource Locator (URL) with the user name of the Passport. As a result of such a hidden security trouble in the authentication mechanism, the Passport authentication service can not provide reliable authentication services in network communications.

In addition, due to the characteristics of the Passport per se, the Passport does not support essential functions of a Home Subscriber Server (HSS). Meanwhile, the Passport does not support various Call Session Control Function (CSCF) entities and interaction protocols, so that no real-time communicational connection can be established. Therefore, the application of the Passport in the telecommunication networks has been hampered.

To sum up, the Passport authentication mechanism has a hidden security trouble and has been limited correspondingly in its application in the communication networks.

### Summary of the Invention

In view of the above problems occurring in the prior art, an object of the invention is to provide a system and method for authenticating access to a communication network, thereby improving the security, convenience and reliability in providing authentication processes for various services during network communication.

The object of the invention is attained through the following technical solutions.

A system for authenticating access to a communication network, including a client and an authentication server, wherein:
the authentication server is configured to authenticate access of a plurality of services of the client to the network according to requests initiated by the client for authenticating access of the plurality of services to the network.

The system for authenticating access to a communication network according to the invention may further include a content provider, configured to communicate with the client via different authentication servers, so as to provide its own information to the client and provide information of the client to a service provider via the authentication server.

The system for authenticating access to a communication network according to the invention may further include a service provider, configured to communicate with the client via a content provider, so as to provide its own service to the client via the authentication server according to a requirement of the client.

The system for authenticating access to a communication network according to the invention may further include
a content/service provision authenticator, configured to authenticate a content/service required by the client; and
an integrated authentication processing module, configured to authenticate, in an integrated way, access of the client to the network and a process of obtaining the content/service, according to the authentication results of the authentication server and the content/service provision authenticator.

The integrated authentication module is built in the authentication server and/or the service provider.

The authentication server is an authentication, authorization and accounting server in the communication network, or a home subscriber server in an Internet multimedia subsystem.

The content/service provision authenticator includes
at least one content provision authenticator and/or service provision authenticator.

A method for authenticating access to a communication network, including:
initiating an authentication request from a client to an authentication server and a content/service provision authenticator, and performing integrated authentication processing on an obtained authentication result to obtain an authentication result for the client.

The method particularly includes:
A. initiating the authentication request from the client to the authentication server and obtaining the obtained authentication result; and
B. sending the obtained authentication result together with a service request message from the client to the content/service provision authenticator, and performing, at the content/service provision authenticator, authentication on a service required by the client as well as integrated authentication processing to obtain the authentication result for the client.

The method further includes:
sending a service request message from the client to the content/service provision authenticator, instructing, by the content/service provision authenticator, the client to initiate an authentication request to the authentication server, and performing step A.

Step A includes:
sending an authentication request message from the client to the authentication server, the authentication request message carrying information regarding a network attribute, device attribute, service attribute and/or identity attribute of the client; and
authenticating, by the authentication server, the authentication request message, determining parameters of the client for the service, and returning the parameters as an authentication result to the client.

The information carried in the service request message includes:
information regarding an device attribute, service attribute and/or identity attribute of the client.

The integrated authentication processing in step B includes:
comparing, by the content/service provision authenticator, a result of the authentication performed at the content/service provision authenticator on the service required by the client with the obtained authentication result, determining service parameters provided for the client to implement the service, and returning the service parameters as an integrated authentication result to the client.

In the case of an Internet multimedia subsystem, the method further includes:
C. after the client has received the integrated authentication result obtained through the authentication processing, registering, by a serving call session control function entity, information regarding the integrated authentication result with a home subscriber server.

Step C includes:
sending a register message carrying the information regarding the integrated authentication result from the client to a proxy call session control function entity;
sending the register message to an interrogating call session control function entity in an network to which the client homes, and obtaining, by the interrogating call session control function entity, information regarding the serving call session control function entity by querying the home subscriber server; and
sending the register message to the serving call session control function entity, registering, by the serving call session control function entity, the information regarding the integrated authentication result for the client carried in the register message with the home subscriber server, and controlling, by the serving call session control function entity, the service implemented by the client, according to the integrated authentication result.

Step C further includes:
authenticating, at the home subscriber server or another entity, capability information that a user requests to be registered, and when the capability information of the user is authenticated, registering the capability information with the home subscriber server.

After step C, the method further includes:
when a calling user equipment initiates a call to a called user equipment, sending a requirement for a capability of a called user equipment to the home subscriber server, querying about a corresponding called user equipment, and returning information regarding the called user equipment; and
initiating call processing according to the information regarding the called user equipment.

As can be seen from the above technical solutions according to the invention, the authentication methods according to the invention can support a wide range of network-integrated and service-integrated applications, including:
an integrated application supporting third-party authentication and a value-added service provider, for example, an authentication function implemented between a bank and a user by a third-party Certificate Authority (CA), and an authentication function implemented between a user and a merchant by a bank;
an integrated application supporting an operator data network and a value-added service provider, in which the value-added service provider obtains an authentication result that a user is trustable via the operator data network to provide an operable value-added service; and
an integrated application supporting a Session Initiation Protocol (SIP) network and a web-based network, in which the SIP network provides a user with abundant network attributes so that provision of network services with quality assurance can be facilitated to a great extent.

### Brief Description of the Drawings

Figure 1 is a schematic diagram illustrating a structure of a system according to the invention;
Figure 2 is a schematic flowchart illustrating a flow of an indirect authentication mode according to the invention;
Figure 3 is a schematic diagram illustrating an application of the indirect authentication mode as illustrated in Figure 2;
Figure 4 is a schematic flowchart illustrating a flow of a direct authentication mode according to the invention;
Figure 5 is a schematic diagram illustrating an application of the direct authentication mode as illustrated in Figure 4;
Figure 6 is a schematic diagram illustrating a process in an Internet Multimedia Subsystem (ISM) according to the invention; and
Figure 7 is a schematic diagram illustrating a call process according to the invention.

### Detailed Description of the Embodiments

The invention provides a multi-home multi-authentication system and method in a multi-homing application in which a user homes to an NGN, an NGI and the like, thereby one party may perform integrated authentication by using an authentication result of another party, and may trigger an authentication process for another home of the client.

A process for implementing the invention particularly includes:
1. a method for providing multi-homing multi-authentication for a user;
2. adding information regarding an identity attribute of the user;
3. adding information regarding a content attribute of the user; and
4. adding information regarding a network attribute of the user.

For better understanding of the invention, embodiments of the invention will be described below in detail with reference to the accompanying drawings.

In an implementation process, the invention relates particularly to multiple nodes, attribute information regarding authentication and a multi-authentication method.

### 1. Multiple nodes

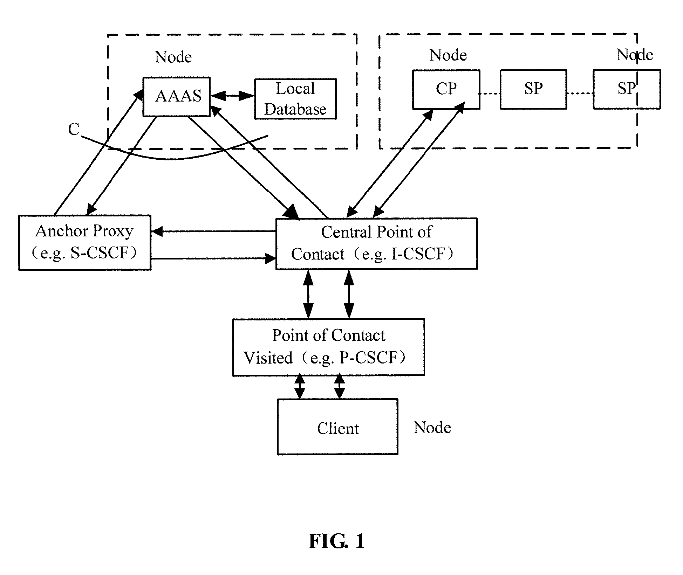

A multi-home multi-authentication system includes multiple nodes, as shown in Figure 1, including a client, an Authentication, Authorization and Accounting Server (AAAS), a Content Provider (CP), and a Service Provider (SP), and protocols for authenticating the multiple nodes one another.

The first node is the client, which is a node for service implementation and service presence for a user. The first node may be a general User Equipment (UE), or a Unified Communications client.

The second node is the authentication server in the multi-home multi-authentication system, which supports multiple authentication protocols and a general authentication protocol. The authentication server may be an AAAS in the communication network.

The third node is the CP, which communicates with the first node, the client, via the second node, the authentication server, sends information of the CP to the first node, the client, and sends information regarding the first node, the client, to the fourth node, the SP, via the second node, the authentication server.

The fourth node is the SP, which communicates with the first node, the client, via the third node, the CP, and sends information of the SP to the first node, the client, via the second node, the authentication server, according to the requirement of the first node, the client.

The second node, the authentication server, thru the fourth node, the SP, may be integrated on a physical server.

### 2. Attribute information regarding authentication

The attribute information regarding authentication includes information regarding a network attribute, information regarding an identity attribute, information regarding a device attribute, and information regarding a content attribute.

The information regarding a network attribute includes a communication interface, communication protocol, communication capability, and so on of the network.

The information regarding an identity attribute includes contents relating to the identity of the user, such as an identification, security context, gender, age, occupation, contact information, preference and so on of the user.

The information regarding a device attribute includes a computation capability, storage capability, communication capability, and so on of the UE.

The information regarding a content attribute includes content materials of the user, such as documents, pictures, audios, data, and so on, and indices of the content materials.

### 3. Multi-home multi-authentication method

As shown in Figure 1, the CP or SP obtains attribute parameters regarding authentication of the user and his/her UE from an HSS in the network of the network operator, and compares the attribute parameters regarding authentication with the requirement of the authentication. If the attribute parameters regarding authentication meet the requirement of the authentication, a corresponding service is provided for the user.

The multi-home multi-authentication system and method will be described below respectively.

The multi-home multi-authentication system and method is an authentication system and method which enable the CP/SP to connect telecommunication users in an extensive and efficient way, and also a third-party authentication system and method which ensure authenticity of the two parties involved in interaction and transaction.

As the demand on communications varies, an unheard-of attention has been paid to the network intelligence. The profit points of network operation have been changed gradually from the traditional voice service to data, content service, and so on. Relevant data reveals that application service providers such as an SP/CP can attain a very high profit.
Accordingly, a great number of telecommunication users need to be connected in an extensive and efficient way.

The invention provides a system for authenticating access to a communication network, which is a system for authenticating access in the case of provision of multiple services, and as shown in Figure 1, includes:

a client, i.e. user client, configured to initiate to an authentication server requests for authenticating access of a plurality of services to the network and obtain contents provided by a content provider for the plurality of services and services provided by a service provider for the plurality of services;

the authentication server, configured to authenticate access of the plurality of services of the client to the network according to the requests initiated by the client for authenticating access of the plurality of services to the network, wherein the client obtains different contents and/or services from access networks for the plurality of services according to an authentication result; the authentication server may be an AAAS in the communication network;

a content/service provision authenticator, configured to authenticate a content/service required by the client; the content/service provision authenticator includes a plurality of content provision authenticators and/or a plurality of service provision authenticator;

the content provider, configured to communicate with the client via different authentication servers, so as to provide its own information to the client and provide information of the client to the service provider via the authentication server;

the service provider configured to communicate with the client via the content provider, so as to provide its own service to the client via the authentication server according to the requirement of the client; and

an integrated authentication processing module, configured to authenticate, in an integrated way, access of the client to the network and a process of obtaining the content/service, according to the authentication results of the authentication server and the content/service provision authenticator.

As shown in Figure 1, the node which is the client communicates with the AAAS and the CP and SP via a Point of Contact Visited (SPCV), such as a Proxy Call Server Control Function (P-CSCF), and a Central Point of Contact (SCPC), such as an Interrogating Call Session Control Function (I-CSCF). The SCPC communicates with the AAAS via an anchor proxy, such as a Serving Call Session Control Function (S-CSCF). The integrated authentication processing module is built in the CP/SP and configured to perform integrated authentication for the client according to the authentication result of the AAAS.

The method for authenticating access to a communication network is particularly a multi-home multi-authentication method and includes two implementation modes, a direct authentication mode and an indirect authentication mode.

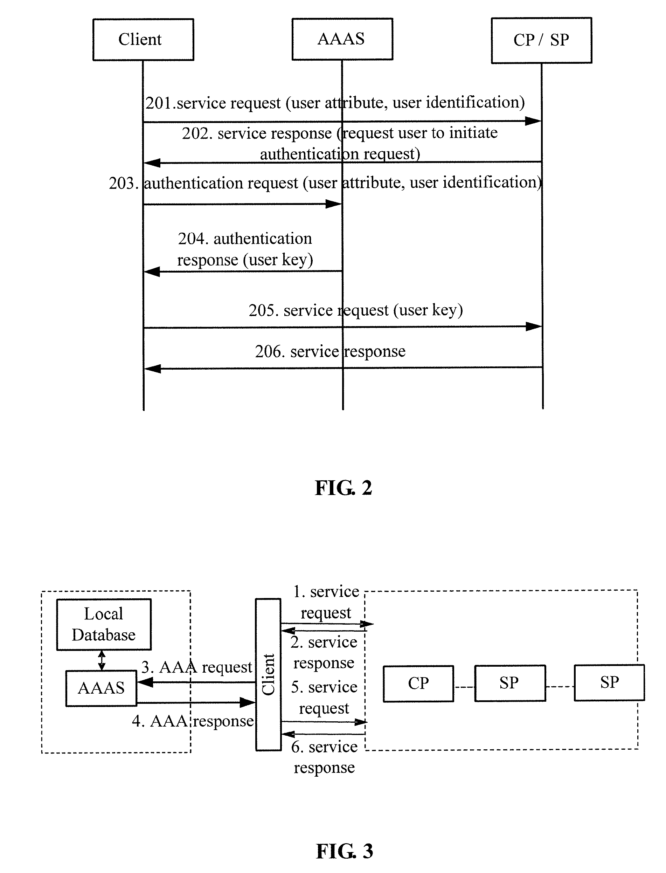

As shown in Figures 2 and 3, the indirect authentication mode includes the following processes.

Process 201: a UE initiates a service request to a CP/SP.

As shown in Figure 2, the service request initiated from the UE (the client) to the CP/SP contains various possible information, including:
information regarding a request for connection to the destination SP/CP;
information regarding a device attribute;
information regarding an identity attribute; and
information regarding a service attribute.

The contents of the information have been described earlier.

Process 202: the CP/SP returns a service response to the UE.

The CP/SP can not recognize the user attributes and thus returns to the UE a message requesting the UE to initiate an authentication request with the information of the CP/SP to the AAAS.

Process 203: the UE initiates an authentication request to an AAAS, i.e. sends an authentication message.

The authentication request initiated by the UE to the AAAS contains various possible information, including:
information regarding a network attribute of the user;
information regarding a device attribute of the user;
information regarding an identity attribute of the user;
information regarding a service attribute of the user; and
a request for connection to the destination SP/CP.

Process 204: the AAAS returns a response to the request.

Upon receiving the authentication request, the AAAS compares the information regarding the network attribute, identity attribute, subscription attribute, service request, and so on of the UE with the attributes registered by the CP/SP for a service to determine whether the service is available for the UE.

The AAAS encapsulates the authentication result into a user key, in which various parameters are defined for the flow of the service, including:
user network parameters, operator bearer network parameters and a service request pattern.

Process 205: the UE again requests the CP/SP to provide the service, i.e. initiates a service request.

The UE requests the service from the CP/SP by using the user key transmitted while being encrypted.

Process 206: the CP/SP returns a result of the service request, i.e. a response.

The CP compares a service list and service parameters provided by the CP with the user request and the user key to determine whether the CP per se should provide a content or the SP subject to the CP should provide a service, and returns content/service provision parameters.

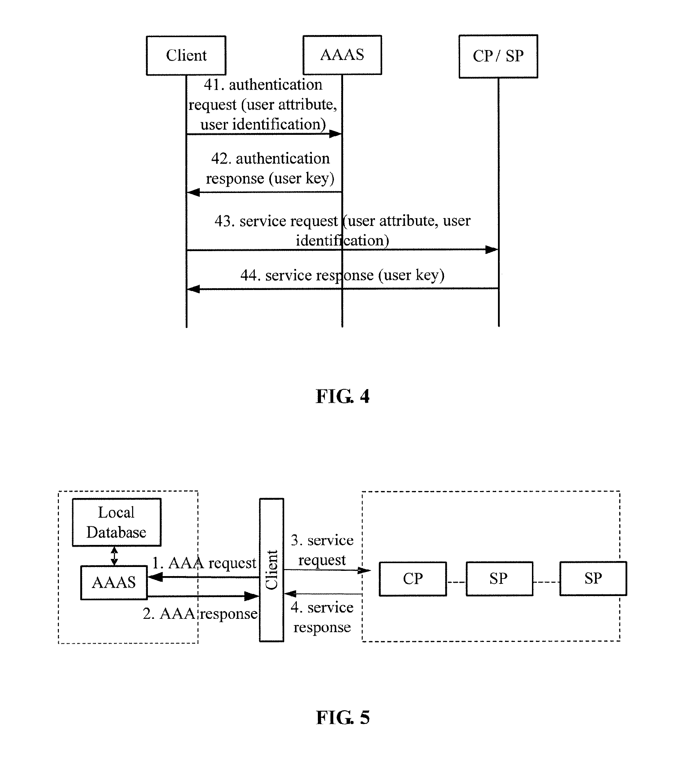

As shown in Figures 4 and 5, the direct authentication mode includes the following processes.

Process 41: a UE sends an AAA request to an AAAS.

The service authentication request initiated from the UE to the AAAS contains various possible information, including:
information regarding a network attribute of the user, particularly regarding an access network channel that has been allocated/a network channel quality parameter that has been negotiated;
information regarding a UE attribute;
information regarding an identity attribute of the user;
information regarding a request for connection to a destination SP/CP;
information regarding a service attribute of the user; and
the address of the AAAS.

Process 42: the AAAS returns a response to the request.

Upon receiving the authentication request, the AAAS compares the information regarding the network attribute, identity attribute, subscription attribute, service request, and so on of the UE with the attributes registered by the CP/SP for a service to determine whether the service is available for the UE.

The AAAS encapsulates the authentication result into a user key, in which various parameters are defined for the flow of the service, including: user network parameters, operator bearer network parameters and a service request pattern.

Process 43: the UE requests the CP/SP to provide the service, i.e. initiates a service request.

The UE sends the service request and the user key to the CP/SP. In particular, the message may be transmitted through an encrypted channel.

Process 44: the CP/SP returns a response to the service request.

The CP compares a service list and service parameters provided by the CP with the user request and the user key to determine whether the CP per se should provide a content or the SP subject to the CP should provide a service, and returns content/service provision parameters.

An application of the invention will be described below with reference to the accompanying drawings, i.e. a multi-home multi-authentication method applied in an IMS according to the invention.

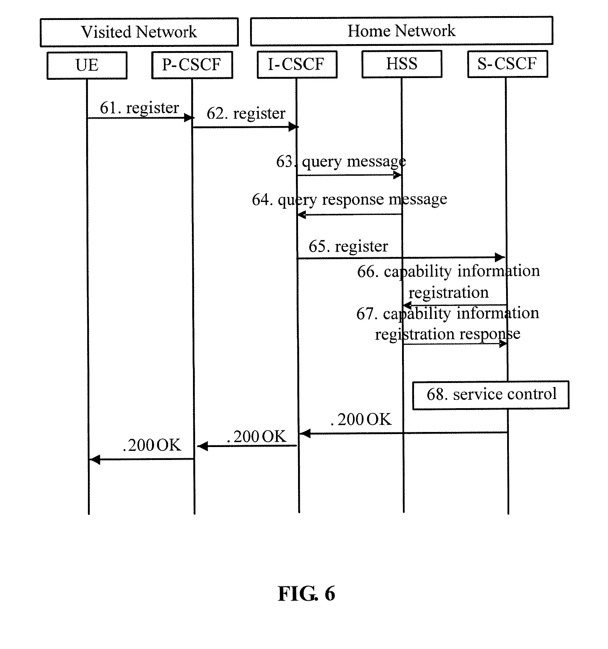

As shown in Figure 6, a specific application includes the following processes.

Process 61: a UE registers with a P-CSCF, i.e. sends a register message carrying capability information of the user.

The capability information carried in the register message sent by the UE, i.e. the client, to the P-CSCF is information regarding an integrated authentication result obtained through integrated authentication processing.

Process 62: the P-CSCF sends the register message to an I-CSCF;

Process 63: the I-CSCF queries an HSS about information of an S-CSCF, i.e. sends a query message (Cx-Query/Cx-Select-Pull).

Process 64: the HSS returns to the I-CSCF the queried information of the S-CSCF, i.e. a query response message (Cx-Query Resp/Cx-Select-Pull Resp).

Process 65: the I-CSCF sends the register message to the S-CSCF according to the returned information of the S-CSCF.

Process 66: the S-CSCF registers the capability information of the UE with the HSS, i.e. through a Cx-put/Cx-Pull message.

In this process, the HSS may authenticate the capability information registered by the UE, or request another entity to authenticate the capability information. Upon being authenticated, the capability information is registered with the HSS, so that the CP, SP, S-CSCF, and so on perform service control using corresponding registered capability information.

Process 67: the HSS stores the capability information of the UE and returns to the S-CSCF a response, i.e. a Cx-put Resp/Cx-Pull Resp message.

Process 68: the S-CSCF performs service control.

Process 69: the S-CSCF returns a registration successful message (i.e. a 200 OK message) to the I-CSCF.

Process 610: the I-CSCF returns a registration successful message to the P-CSCF.

Process 611: the P-CSCF returns a registration successful message to the user.

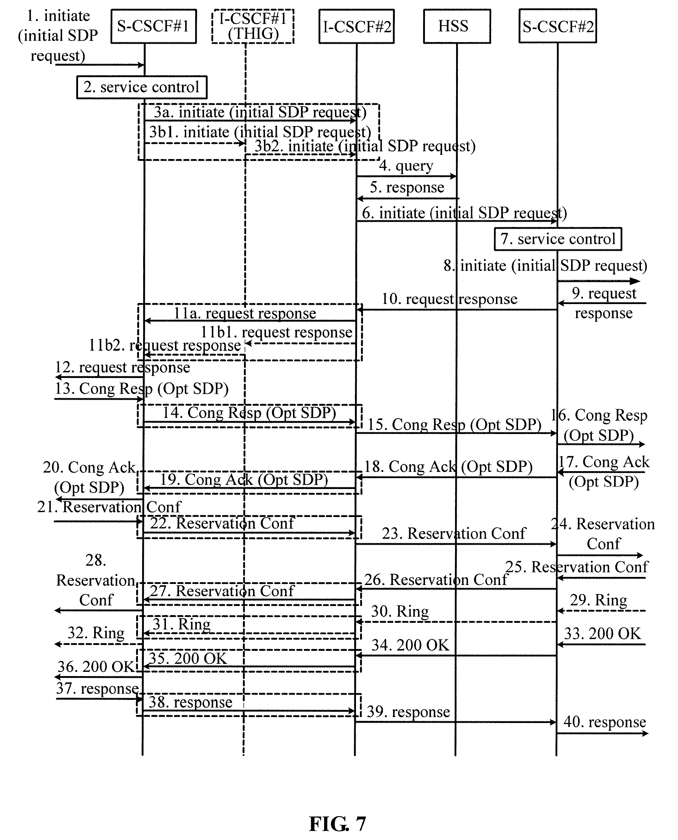

Figure 7 shows a calling network, a calling home network, a called network and a called home network. The calling home network includes S-CSCF #1 and I-CSCF #1, and the called home network includes S-CSCF #2 and I-CSCF #2. Call processing in an IMS based on the multi-home multi-authentication mechanism according to the invention mainly includes the following processes.

Processes 1-3: the calle r initiates a session, including a requ est Invite for initial Session Description Protocol (SDP) offer, service control and a request for SDP offer from S-CSCF #1 to I-CSCF #2.

Process 4: a requirement on the capability of the called UE and the name of the callee are sent to the HSS for querying the callee, i.e. a query message Location Query is sent, because multiple UEs are registered with the same user identification and may have different capabilities.

Process 5: the HSS returns a response message indicating a UE satisfying the requirement on UE, and I-CSCF #2 routes the call to S-CSCF #2 for the callee according to the returned message.

Then the subsequent call processing may be performed, which includes the following processes.

Process 6: I-CSCF #2 in the called home network sends a request Invite for initial SDP offer to S-CSCF #2.

Process 7: upon receiving the request, the S-CSCF #2 performs service control.

Process 8: the S-CSCF #2 sends the request Invite for initial SDP offer to the network where the called user is located.

Process 9: the network where the called user is located returns an offer response message to the S-CSCF #2.

Process 10: the S-CSCF #2 continues to send the offer response message to I-CSCF #2 in the called home network.

Process 11: I-CSCF #2 in the called home network sends the offer response message to S-CSCF #1 in the calling home network.

As shown in Figure 7, the offer response message may be sent to corresponding S-CSCF #1 directly or via I-CSCF #1.

Process 12: S-CSCF #1 sends the offer response message to the calling user network.

Process 13: the calling user network returns a configuration response message Response Conf (Opt SDP) to S-CSCF #1, the message containing optional SDP. The configuration response message is returned to the called user network through processes 14, 15 and 16 sequentially.

Process 17: upon receiving the configuration response message, the called user network returns a configuration acknowledgement message Conf Ack (Opt SDP) to S-CSCF #2, the message containing optional SDP. The configuration acknowledgement message is returned to the calling user network through processes 18, 19 and 20 sequentially.

Thereafter, a reservation configuration message Reservation Conf is transferred between the calling and called user network through processes 21 to 28, and a ring tone message Ring is sent to the calling user through processes 29 to 32. Finally, a 200 OK answer message is sent from the called user network to the calling user network, and a corresponding acknowledgement message is sent from the calling user network to the called user network through processes 37 to 40.

During the call processing as shown in Figure 7, the messages exchanged between S-CSCF #1 and S-CSCF #2, for example as shown in the broken-line boxes, may be exchanged directly, or via I-CSCF #1.

Therefore, the invention can support a wide range of network-integrated and service-integrated applications, including:
an integrated application supporting third-party authentication and a value-added service provider, for example, an authentication function implemented between a bank and a user by a third-party Certificate Authority (CA), and an authentication function implemented between a user and a merchant by a bank;
an integrated application supporting an operator data network and a value-added service provider, in which the value-added service provider obtains an authentication result that a user is trustable via the operator data network to provide an operable value-added service; and
an integrated application supporting a Session Initiation Protocol (SIP) network and a web-based network, in which the SIP network provides a user with abundant network attributes so that provision of network services with quality assurance can be facilitated to a great extent.

The present invention has been described and illustrated with reference to the preferred embodiments thereof. It shall be recognized by those skilled in the art that those embodiments are merely illustrative and not restrictive, that the present invention shall not be limited thereto, and that various modifications and variations can be made thereto in light of the descriptions and the drawings without departing from the scope of the present invention as defined by the following claims.

## Claims

1. A system for authenticating access to a communication network, comprising a client and an authentication server, wherein:
the authentication server is configured to authenticate access of a plurality of services of the client to the network according to requests initiated by the client for authenticating access of the plurality of services to the network.

2. The system for authenticating access to a communication network according to claim 1, further comprising a content provider, configured to communicate with the client via different authentication servers, so as to provide its own information to the client and provide information of the client to a service provider via the authentication server.

3. The system for authenticating access to a communication network according to claim 1 or 2, further comprising a service provider, configured to communicate with the client via a content provider, so as to provide its own service to the client via the authentication server according to a requirement of the client.

4. The system for authenticating access to a communication network according to claim 3, further comprising
a content/service provision authenticator, configured to authenticate a content/service required by the client; and
an integrated authentication processing module, configured to authenticate, in an integrated way, access of the client to the network and a process of obtaining the content/service, according to the authentication results of the authentication server and the content/service provision authenticator.

5. The system for authenticating access to a communication network according to claim 4, wherein the integrated authentication module is built in the authentication server and/or the service provider.

6. The system for authenticating access to a communication network according to claim 1 or 2, wherein the authentication server is an authentication, authorization and accounting server in the communication network, or a home subscriber server in an Internet multimedia subsystem.

7. The system for authenticating access to a communication network according to claim 1 or 2, wherein the content/service provision authenticator comprises
at least one content provision authenticator and/or service provision authenticator.

8. A method for authenticating access to a communication network, comprising:
initiating an authentication request from a client to an authentication server and a content/service provision authenticator, and performing integrated authentication processing on an obtained authentication result to obtain an authentication result for the client.

9. The method for authenticating access to a communication network according to claim 8, further comprising:
A. initiating the authentication request from the client to the authentication server and obtaining the obtained authentication result; and
B. sending the obtained authentication result together with a service request message from the client to the content/service provision authenticator, and performing, at the content/service provision authenticator, authentication on a service required by the client as well as integrated authentication processing to obtain the authentication result for the client.

10. The method for authenticating access to a communication network according to claim 9, further comprising:
sending a service request message from the client to the content/service provision authenticator, instructing, by the content/service provision authenticator, the client to initiate an authentication request to the authentication server, and performing step A.

11. The method for authenticating access to a communication network according to claim 9 or 10, step A comprises:
sending an authentication request message from the client to the authentication server, the authentication request message carrying information regarding a network attribute, device attribute, service attribute and/or identity attribute of the client; and
authenticating, by the authentication server, the authentication request message, determining parameters of the client for the service, and returning the parameters as an authentication result to the client.

12. The method for authenticating access to a communication network according to claim 9 or 10, wherein the information carried in the service request message comprises:
information regarding a device attribute, service attribute and/or identity attribute of the client.

13. The method for authenticating access to a communication network according to claim 9 or 10, wherein the integrated authentication processing performed in step B comprises:
comparing, by the content/service provision authenticator, a result of the authentication performed at the content/service provision authenticator on the service required by the client with the obtained authentication result, determining service parameters provided for the client to implement the service, and returning the service parameters as an integrated authentication result to the client.

14. The method for authenticating access to a communication network according to claim 8, 9 or 10, wherein in the case of an Internet multimedia subsystem, the method further comprises:
C. registering with a home subscriber server, by a serving call session control function entity, information regarding an integrated authentication result obtained through the authentication processing, after the client receives the integrated authentication result.

15. The method for authenticating access to a communication network according to claim 14, wherein step C comprises:
sending a register message carrying the information regarding the integrated authentication result from the client to a proxy call session control function entity;
sending the register message to an interrogating call session control function entity in a network to which the client homes, and obtaining, by the interrogating call session control function entity, information regarding the serving call session control function entity by querying the home subscriber server; and
sending the register message to the serving call session control function entity, registering, by the serving call session control function entity, the information regarding the integrated authentication result for the client carried in the register message with the home subscriber server, and controlling, by the serving call session control function entity, the service implemented by the client, according to the integrated authentication result.

16. The method for authenticating access to a communication network according to claim 14, wherein step C further comprises:
authenticating, at the home subscriber server or another entity, capability information that a user requests to be registered, and after the capability information of the user is authenticated, registering the capability information with the home subscriber server.

17. The method for authenticating access to a communication network according to claim 14, wherein after step C, the method further comprises:
when a calling user equipment initiates a call to a called user equipment, sending a requirement for a capability of a called user equipment to the home subscriber server, querying about a corresponding called user equipment, and returning information regarding the called user equipment; and
initiating call processing according to the information regarding the called user equipment.
